# EUROPEAN PATENT APPLICATION

(11) **EP 4 800 080 A1**
(43) Date of publication of application: **02.09.2026**
(21) Application number: 26160377.3
(22) Date of filing: 24.02.2026
(51) Int. Cl.: C09D 11/101, C09D 11/38, C09D 11/322

(54) **RADIATION-CURABLE INK JET INK COMPOSITION**

(30) Priority: 26.02.2025 JP 2025029475
(71) Applicant: Seiko Epson Corporation, Tokyo 160-8801 (JP)
(72) Inventor: SAITO, Toru, Suwa-shi, 392-8502 (JP); ORII, Masakazu, Suwa-shi, 392-8502 (JP); SEKINE, Midori, Suwa-shi, 392-8502 (JP); FUJISAWA, Yusuke, Suwa-shi, 392-8502 (JP)
(74) Representative: Lewis Silkin LLP

(57) **Abstract**

A radiation-curable ink jet ink composition according to an embodiment of the present disclosure contains a polymerizable compound and a photopolymerization initiator. The polymerizable compound contains a polyfunctional polymerizable compound. The photopolymerization initiator contains (2,4,6-trimethylbenzoyl)bis(p-tolyl)phosphine oxide. The content of (2,4,6-trimethylbenzoyl)bis(p-tolyl)phosphine oxide is 3% by mass or more with respect to the total amount of the ink composition. The content of the polyfunctional polymerizable compound is 20% by mass or more with respect to the total amount of the ink composition.

## Description

The present application is based on, and claims priority from JP Application Serial Number 2025-029475, filed February 26, 2025, the disclosure of which is hereby incorporated by reference herein in its entirety.

### BACKGROUND

### 1. Technical Field

The present disclosure relates to a radiation-curable ink jet ink composition.

### 2. Related Art

Ink jet recording methods can record high-definition images using relatively simple apparatuses, and achieve rapid development in various fields. In the development, various studies are being made on ink jet ink compositions that are cured by being irradiated with radiation.

For example, JP-A-2023-163470 describes a radiation-curable ink jet composition containing a relatively large number of polyfunctional monomers and ethyl (2,4,6-trimethylbenzoyl)phenylphosphinate as a photopolymerization initiator.

However, there is a problem in achieving both excellent abrasion resistance and excellent storage stability of the ink composition in high-temperature and low-temperature environments.

### SUMMARY

An aspect of a radiation-curable ink jet ink composition according to the present disclosure contains a polymerizable compound and a photopolymerization initiator, wherein the polymerizable compound contains a polyfunctional polymerizable compound, the photopolymerization initiator contains (2,4,6-trimethylbenzoyl)bis(p-tolyl)phosphine oxide, a content of (2,4,6-trimethylbenzoyl)bis(p-tolyl)phosphine oxide is 3% by mass or more with respect to a total amount of the ink composition, and a content of the polyfunctional polymerizable compound is 20% by mass or more with respect to the total amount of the ink composition.

### BRIEF DESCRIPTION OF THE DRAWINGS

FIG. 1 is a perspective view of an example of a recording apparatus.
FIG. 2 is Table 1 showing the compositions and the evaluation results of radiation-curable ink jet ink compositions according to Examples.
FIG. 3 is Table 2 showing the compositions and the evaluation results of radiation-curable ink jet ink compositions according to Examples and Comparative Examples.

### DESCRIPTION OF EMBODIMENTS

Hereinafter, embodiments of the present disclosure will be described. The embodiments described below describe examples of the present disclosure. The present disclosure is not limited to the following embodiments, and includes various modifications implemented within a range not changing a gist of the present disclosure. It should be noted that not all of the configurations described below are essential configurations of the present disclosure.

In the present specification, a numerical range indicated by using "to" means a range including numerical values described before and after "to" as a lower limit value and an upper limit value.

In the present specification, "(meth)acrylic" represents acrylic or methacrylic, and "(meth)acrylate" represents acrylate or methacrylate.

### 1. Radiation-Curable Ink Jet Ink Composition

A radiation-curable ink jet ink composition according to an embodiment of the present disclosure contains a polymerizable compound and a photopolymerization initiator, wherein the polymerizable compound contains a polyfunctional polymerizable compound, the photopolymerization initiator contains (2,4,6-trimethylbenzoyl)bis(p-tolyl)phosphine oxide, the content of (2,4,6-trimethylbenzoyl)bis(p-tolyl)phosphine oxide is 3% by mass or more with respect to the total amount of the ink composition, and the content of the polyfunctional polymerizable compound is 20% by mass or more with respect to the total amount of the ink composition.

In recorded matter using a radiation-curable ink jet ink composition (hereinafter, may be simply referred to as "ink composition" or "ink"), it is desirable that a coating film obtained by curing the ink has excellent abrasion resistance.

As the photopolymerization initiator used in the radiation-curable ink jet ink composition, acylphosphine oxide-based photopolymerization initiators such as ethyl (2,4,6-trimethylbenzoyl)phenylphosphinate (TPO-L, another name: ethyl phenyl(2,4,6-trimethylbenzoyl)phosphinate) and bis(2,4,6-trimethylbenzoyl)-phenylphosphine oxide (819) are known. It has now been found that an ink containing ethyl (2,4,6-trimethylbenzoyl)phenylphosphinate has decreased storage stability when left to stand in a high-temperature environment, and an ink containing bis(2,4,6-trimethylbenzoyl)-phenylphosphine oxide has decreased storage stability when left to stand in a low-temperature environment.

It is presumed that ethyl (2,4,6-trimethylbenzoyl)phenylphosphinate (TPO-L) is a liquid type photopolymerization initiator and contains more impurities than a powder type one, and is thus likely to have decreased stability in a high-temperature environment. In addition, it is presumed that bis(2,4,6-trimethylbenzoyl)-phenylphosphine oxide (819) has a relatively high molecular weight and low solubility in the ink, and is thus likely to be precipitated and have decreased stability in a low-temperature environment.

On the other hand, the radiation-curable ink jet ink composition according to the present embodiment contains a predetermined amount or more of (2,4,6-trimethylbenzoyl)bis(p-tolyl) phosphine oxide as the photopolymerization initiator and a predetermined amount or more of the polyfunctional polymerizable compound, and can thus achieve both excellent abrasion resistance and excellent storage stability of the ink composition in high-temperature and low-temperature environments.

It is noted that "radiation-curable ink jet ink composition" according to the present embodiment is an ink composition that is used by being ejected from an ink jet head by an ink jet method. Hereinafter, a radiation-curable ink composition will be described as an embodiment of the radiation-curable ink jet ink composition, but the composition according to the present embodiment may be a composition other than the ink composition, for example, a composition for use in 3D shaping.

The radiation-curable ink jet ink composition according to the present embodiment is cured by irradiation with radiation. Examples of the radiation include ultraviolet rays, electron beams, infrared rays, visible rays, X-rays, and active energy rays. As the radiation, ultraviolet rays are preferable from the viewpoint that a radiation source is easily obtained and widely used and the viewpoint that a material suitable for curing by irradiation with ultraviolet rays is easily obtained and widely used.

Hereinafter, each component contained in the radiation-curable ink jet ink composition according to the present embodiment will be described.

### 1.1 Polymerizable Compound

The radiation-curable ink jet ink composition according to the present embodiment contains a polymerizable compound, in which the polymerizable compound contains a polyfunctional polymerizable compound, and the content of the polyfunctional polymerizable compound is 20% by mass or more with respect to the total amount of the ink composition.

"Polymerizable compound" refers to a compound containing a polymerizable functional group, and may be a monomer or a polymer. It is noted that "polymerizable functional group" refers to a group involved in a polymerization reaction.

Examples of the polymerizable compound include a polyfunctional polymerizable compound having a plurality of polymerizable functional groups and a monofunctional polymerizable compound having one polymerizable functional group. One kind of each polymerizable compound may be used alone, or two or more kinds thereof may be used in combination.

The content of the polymerizable compound is preferably 30% by mass or more, more preferably 50% by mass or more, even more preferably 70% by mass or more, and particularly preferably 80% by mass or more with respect to the total amount of the ink composition from the viewpoint of more excellent abrasion resistance. The upper limit of the content of the polymerizable compound is not particularly limited, and is preferably 99% by mass or less, more preferably 95% by mass or less, and even more preferably 90% by mass or less with respect to the total amount of the ink composition.

### 1.1.1 Polyfunctional Polymerizable Compound

The polymerizable compound contains a polyfunctional polymerizable compound. Examples of the polyfunctional polymerizable compound include a bifunctional polymerizable compound having two polymerizable functional groups and a tri-or more functional polymerizable compound having three or more polymerizable functional groups.

In the radiation-curable ink jet ink composition according to the present embodiment, the content of the polyfunctional polymerizable compound is 20% by mass or more with respect to the total amount of the ink composition, which is preferably 25% by mass or more, more preferably 30% by mass or more, even more preferably 35% by mass or more, and particularly preferably 40% by mass or more. When the content of the polyfunctional polymerizable compound is within the above range, the curability and the abrasion resistance of the ink tend to be more excellent.

The upper limit of the content of the polyfunctional polymerizable compound is preferably 90% by mass or less, more preferably 70% by mass or less, even more preferably 60% by mass or less, and particularly preferably 50% by mass or less with respect to the total amount of the ink composition from the viewpoint that the flexibility in the cured ink tends to be more excellent.

From the same viewpoint, the content of the polyfunctional polymerizable compound is preferably 10% by mass or more, more preferably 15% by mass or more, even more preferably 20% by mass or more, and particularly preferably 30% by mass or more with respect to the total amount of the polymerizable compound. The content of the polyfunctional polymerizable compound is preferably 90% by mass or less, more preferably 90% by mass or less, even more preferably 70% by mass or less, and particularly preferably 50% by mass or less with respect to the total amount of the polymerizable compound.

### 1.1.1.1 Bifunctional Polymerizable Compound

The polyfunctional polymerizable compound preferably contains a bifunctional polymerizable compound. When the polyfunctional polymerizable compound contains the bifunctional polymerizable compound, the flexibility in the cured ink tends to be more excellent.

The bifunctional polymerizable compound is not particularly limited, and examples thereof include a vinyl ether group-containing (meth)acrylate and bifunctional (meth)acrylates other than the vinyl ether group-containing (meth)acrylate.

The content of the bifunctional polymerizable compound is preferably 20% by mass or more, more preferably 25% by mass or more, even more preferably 30% by mass or more, still even more preferably 35% by mass or more, and particularly preferably 40% by mass or more with respect to the total amount of the ink composition from the viewpoint that the curability and the abrasion resistance of the ink tend to be more excellent.

The upper limit of the content of the bifunctional polymerizable compound is preferably 70% by mass or less, more preferably 60% by mass or less, and even more preferably 50% by mass or less with respect to the total amount of the ink composition from the viewpoint that the flexibility in the cured ink tends to be more excellent.

Since there is a tendency that both the curability and the abrasion resistance of the ink and the flexibility in the cured ink can be excellent, the content of the bifunctional polymerizable compound is preferably 20% by mass or more and 70% by mass or less with respect to the total amount of the ink composition.

From the same viewpoint, it is also preferable that the content of the bifunctional polymerizable compound with respect to the total amount of the polymerizable compound be similar to the content of the polyfunctional polymerizable compound with respect to the total amount of the polymerizable compound.

### 1.1.1.1.1 Vinyl Ether Group-Containing (Meth)acrylate

The bifunctional polymerizable compound preferably contains a polymerizable compound represented by Formula (1) below (a vinyl ether group-containing (meth)acrylate). When the bifunctional polymerizable compound contains such a vinyl ether group-containing (meth)acrylate, there is a tendency that the viscosity of the ink composition is decreased, and the ejection stability is further improved. In addition, the curability of the ink composition is further improved, and a recording speed can be further increased as the curability is improved. Furthermore, the abrasion resistance tends to be further improved.

H₂C=CR¹-CO-OR²-O-CH=CH-R³ ··· (1)

where R¹ is a hydrogen atom or a methyl group, R² is a divalent organic residue having 2 to 20 carbon atoms, and R³ is a hydrogen atom or a monovalent organic residue having 1 to 11 carbon atoms.

In Formula (1) above, examples of the divalent organic residue having 2 to 20 carbon atoms that is represented by R² include a linear, branched, or cyclic alkylene group having 2 to 20 carbon atoms, which may be substituted, an alkylene group having 2 to 20 carbon atoms and having an oxygen atom due to an ether bond and/or an ester bond in the structure, which may be substituted, and a divalent aromatic group having 6 to 11 carbon atoms, which may be substituted. Among these, an alkylene group having 2 to 6 carbon atoms, such as an ethylene group, an n-propylene group, an isopropylene group, or a butylene group, or an alkylene group having 2 to 9 carbon atoms and having an oxygen atom due to an ether bond in the structure, such as an oxyethylene group, an oxy-n-propylene group, an oxyisopropylene group, or an oxybutylene group, is preferable. Further, from the viewpoint of further lowering the viscosity of the composition and further improving the curability of the composition, a compound having a glycol ether chain, in which R² is an alkylene group having 2 to 9 carbon atoms and having an oxygen atom due to an ether bond in the structure, such as an oxyethylene group, an oxy-n-propylene group, an oxyisopropylene group, or an oxybutylene group, is more preferable.

In Formula (1) above, as the monovalent organic residue having 1 to 11 carbon atoms that is represented by R³, a linear, branched, or cyclic alkyl group having 1 to 10 carbon atoms, which may be substituted, or an aromatic group having 6 to 11 carbon atoms, which may be substituted, is suitable. Among these, an alkyl group having 1 or 2 carbon atoms, which is a methyl group or an ethyl group, and an aromatic group having 6 to 8 carbon atoms, such as a phenyl group and a benzyl group, are suitably used.

When each of the above-described organic residues is a group that may be substituted, substituents thereof are divided into a group containing a carbon atom and a group containing no carbon atom. First, when the substituent is a group containing a carbon atom, the carbon atom is counted to be included in the number of carbon atoms in the organic residue. Examples of the group containing a carbon atom include, but not limited to, a carboxy group and an alkoxy group. Next, examples of the group containing no carbon atom include, but not limited to, a hydroxy group and a halogen group.

Specific examples of the compound of Formula (1) are not particularly limited, and include 2-vinyloxyethyl (meth)acrylate, 3-vinyloxypropyl (meth)acrylate, 1-methyl-2-vinyloxyethyl (meth)acrylate, 2-vinyloxypropyl (meth)acrylate, 4-vinyloxybutyl (meth)acrylate, 1-methyl-3-vinyloxypropyl (meth)acrylate, 1-vinyloxymethylpropyl (meth)acrylate, 2-methyl-3-vinyloxypropyl (meth)acrylate, 1,1-dimethyl-2-vinyloxyethyl (meth)acrylate, 3-vinyloxybutyl (meth)acrylate, 1-methyl-2-vinyloxypropyl (meth)acrylate, 2-vinyloxybutyl (meth)acrylate, 4-vinyloxycyclohexyl (meth)acrylate, 6-vinyloxyhexyl (meth)acrylate, 4-vinyloxymethylcyclohexylmethyl (meth)acrylate, 3-vinyloxymethylcyclohexylmethyl (meth)acrylate, 2-vinyloxymethylcyclohexylmethyl (meth)acrylate, p-vinyloxymethylphenylmethyl (meth)acrylate, m-vinyloxymethylphenylmethyl (meth)acrylate, o-vinyloxymethylphenylmethyl (meth)acrylate, 2-(2-vinyloxyethoxy)ethyl methacrylate, 2-(2-vinyloxyethoxy)ethyl acrylate, 2-(vinyloxyisopropoxy)ethyl (meth)acrylate, 2-(vinyloxyethoxy)propyl (meth)acrylate, 2-(vinyloxyethoxy)isopropyl (meth)acrylate, 2-(vinyloxyisopropoxy)propyl (meth)acrylate, 2-(vinyloxyisopropoxy)isopropyl (meth)acrylate, 2-(vinyloxyethoxyethoxy)ethyl (meth)acrylate, 2-(vinyloxyethoxyisopropoxy)ethyl (meth)acrylate, 2-(vinyloxyisopropoxyethoxy)ethyl (meth)acrylate, 2-(vinyloxyisopropoxyisopropoxy)ethyl (meth)acrylate, 2-(vinyloxyethoxyethoxy)propyl (meth)acrylate, 2-(vinyloxyethoxyisopropoxy)propyl (meth)acrylate, 2-(vinyloxyisopropoxyethoxy)propyl (meth)acrylate, 2-(vinyloxyisopropoxyisopropoxy)propyl (meth)acrylate, 2-(vinyloxyethoxyethoxy)isopropyl (meth)acrylate, 2-(vinyloxyethoxyisopropoxy)isopropyl (meth)acrylate, 2-(vinyloxyisopropoxyethoxy)isopropyl (meth)acrylate, 2-(vinyloxyisopropoxyisopropoxy)isopropyl (meth)acrylate, 2-(vinyloxyethoxyethoxyethoxy)ethyl (meth)acrylate, 2-(vinyloxyethoxyethoxyethoxyethoxy)ethyl (meth)acrylate, 2-(isopropenoxyethoxy)ethyl (meth)acrylate, 2-(isopropenoxyethoxyethoxy)ethyl (meth)acrylate, 2-(isopropenoxyethoxyethoxyethoxy)ethyl (meth)acrylate, 2-(isopropenoxyethoxyethoxyethoxyethoxy)ethyl (meth)acrylate, polyethylene glycol monovinyl ether (meth)acrylate, and polypropylene glycol monovinyl ether (meth)acrylate. Among these specific examples, 2-(2-vinyloxyethoxy)ethyl acrylate is particularly preferable in that the curability and the viscosity of the composition can be easily balanced. It is noted that, in the present embodiment, 2-(2-vinyloxyethoxy)ethyl acrylate may also be referred to as VEEA.

The content of the polymerizable compound represented by Formula (1) above is preferably 10% by mass or more, more preferably 15% by mass or more, even more preferably 20% by mass or more, particularly preferably 25% by mass or more, and more particularly preferably 30% by mass or more with respect to the total amount of the ink composition. When the content of the polymerizable compound represented by Formula (1) above is within the above range, especially 10% by mass or more with respect to the total amount of the ink composition, the ink composition tends to have more excellent curability and viscosity as well as abrasion resistance.

In addition, the content of the polymerizable compound represented by Formula (1) above is preferably 70% by mass or less, more preferably 50% by mass or less, even more preferably 30% by mass or less, particularly preferably 20% by mass or less, and more particularly preferably 15% by mass or less with respect to the total amount of the ink composition. When the content of the polymerizable compound represented by Formula (1) above is within the above range, the flexibility in the cured ink tends to be more excellent. 1.1.1.1.2 Bifunctional (Meth)acrylate

The bifunctional (meth)acrylate is not particularly limited so long as it is a bifunctional (meth)acrylate other than Formula (1) above, and examples thereof include dipropylene glycol diacrylate (DPGDA), diethylene glycol di(meth)acrylate, triethylene glycol di(meth)acrylate, tetraethylene glycol di(meth)acrylate, polyethylene glycol di(meth)acrylate, dipropylene glycol dimethacrylate, tripropylene glycol diacrylate (TPGDA), tripropylene glycol dimethacrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, bisphenol A-EO (ethylene oxide) adduct di(meth)acrylate, bisphenol A-PO (propylene oxide) adduct di(meth)acrylate, hydroxypivalic acid neopentyl glycol di(meth)acrylate, and polytetramethylene glycol di(meth)acrylate.

Among these bifunctional (meth)acrylates, the bifunctional polymerizable compound preferably contains any one or more selected from 1,6-hexanediol diacrylate (1,6HDDA), dipropylene glycol diacrylate (DPGDA), and tripropylene glycol diacrylate (TPGDA). When the bifunctional polymerizable compound contains these compounds, the abrasion resistance and the curability of the ink tend to be more excellent.

The content of the bifunctional (meth)acrylate is preferably 5% by mass or more, and more preferably 10% by mass or more with respect to the total amount of the ink composition from the viewpoint that the abrasion resistance and the curability of the ink tend to be more excellent.

In addition, the content of the bifunctional (meth)acrylate is preferably 50% by mass or less, more preferably 30% by mass or less, even more preferably 20% by mass or less, and particularly preferably 15% by mass or less with respect to the total amount of the ink composition.

### 1.1.1.2 Tri- or More Functional Polymerizable Compound

The polyfunctional polymerizable compound preferably contains a tri- or more functional polymerizable compound. When the polyfunctional polymerizable compound contains the tri- or more functional polymerizable compound, the curability of the ink tends to be more excellent.

Examples of the tri- or more functional polymerizable compound include trimethylolpropane tri(meth)acrylate, ethylene oxide-modified trimethylolpropane tri(meth)acrylate, pentaerythritol tri(meth)acrylate, pentaerythritol tetra(meth)acrylate, dipentaerythritol hexaacrylate, dipentaerythritol hexa(meth)acrylate, ditrimethylolpropane tetra(meth)acrylate, glyceryl propoxy tri(meth)acrylate, caprolactone-modified trimethylolpropane tri(meth)acrylate, ethoxylated pentaerythritol tetra(meth)acrylate, and caprolactam-modified dipentaerythritol hexa(meth)acrylate.

Among these, the tri- or more functional polymerizable compound preferably contains any one or more selected from trimethylolpropane triacrylate (TMPTA), ethylene oxide-modified trimethylolpropane triacrylate (EO-modified TMPTA), and dipentaerythritol hexaacrylate (DPHA). When the tri- or more functional polymerizable compound contains these compounds, the curability of the ink tends to be more excellent.

The content of the tri-or more functional polymerizable compound is preferably 1% by mass or more, more preferably 3% by mass or more, and even more preferably 5% by mass or more with respect to the total amount of the ink composition from the viewpoint that the curability of the ink tends to be more excellent.

In addition, the content of the tri-or more functional polymerizable compound is preferably 15% by mass or less, more preferably 10% by mass or less, and even more preferably 7% by mass or less with respect to the total amount of the ink composition.

### 1.1.2 Monofunctional Polymerizable Compound

The polymerizable compound may contain a monofunctional polymerizable compound. The monofunctional polymerizable compound is not particularly limited, and examples thereof include an aromatic group-containing polymerizable compound, a nitrogen-containing monofunctional polymerizable compound, a hydroxy group-containing monofunctional polymerizable compound, a hydrocarbon ring-containing monofunctional polymerizable compound, an ether ring-containing monofunctional polymerizable compound, an aliphatic group-containing polymerizable compound, and a urethane acrylate. Other monofunctional monomers may be contained as needed. The other monofunctional monomers are not particularly limited, and monofunctional monomers having a polymerizable functional group, especially a polymerizable functional group having a carbon-carbon unsaturated double bond, which are known in the related art, can be used.

The content of the monofunctional polymerizable compound is preferably 60% by mass or less, more preferably 50% by mass or less, and even more preferably 40% by mass or less with respect to the total amount of the ink composition. When the content of the monofunctional polymerizable compound is within the above range, there is a tendency that an increase in the viscosity of the ink composition is inhibited and the ink composition can have excellent abrasion resistance. The lower limit of the content of the monofunctional polymerizable compound is not particularly limited, and is preferably 5% by mass or more, more preferably 10% by mass or more, even more preferably 20% by mass or more, and still even more preferably 30% by mass or more with respect to the total amount of the ink composition.

From the same viewpoint, the content of the monofunctional polymerizable compound is preferably 80% by mass or less, more preferably 60% by mass or less, and even more preferably 50% by mass or less with respect to the total amount of the polymerizable compound. The lower limit of the content of the monofunctional polymerizable compound is not particularly limited, and is preferably 10% by mass or more, preferably 20% by mass or more, and more preferably 30% by mass or more with respect to the total amount of the polymerizable compound.

### 1.1.2.1 Aromatic Group-Containing Polymerizable Compound

The monofunctional polymerizable compound may contain an aromatic group-containing polymerizable compound. The aromatic group-containing polymerizable compound is not particularly limited so long as it has an aromatic group, and examples thereof include phenoxyethyl (meth)acrylate, benzyl (meth)acrylate, alkoxylated 2-phenoxyethyl (meth)acrylate, ethoxylated nonylphenyl (meth)acrylate, alkoxylated nonylphenyl (meth)acrylate, p-cumylphenol EO-modified (meth)acrylate, and 2-hydroxy-3-phenoxypropyl (meth)acrylate.

Among these, phenoxyethyl (meth)acrylate and benzyl (meth)acrylate are preferable, phenoxyethyl (meth)acrylate is more preferable, and phenoxyethyl acrylate (PEA) is even more preferable. By using such an aromatic group-containing polymerizable compound, there is a tendency that the solubility of the photopolymerization initiator, which is solid at normal temperature, is further improved, and the curability of the ink composition can be improved. In particular, when an acylphosphine oxide-based polymerization initiator or a thioxanthone-based polymerization initiator, which is solid at normal temperature, is used, the solubility thereof tends to be good. In addition, by using phenoxyethyl (meth)acrylate, there is a tendency that odors can be further reduced.

The content of the aromatic group-containing polymerizable compound is preferably 0 to 50% by mass, more preferably 5 to 30% by mass, even more preferably 5 to 20% by mass, and particularly preferably 5 to 15% by mass with respect to the total amount of the ink composition. When the content of the aromatic group-containing polymerizable compound is within the above range, there is a tendency that the viscosity of the ink composition is further decreased, and the abrasion resistance of the coating film is further improved.

### 1.1.2.2 Nitrogen-Containing Monofunctional Polymerizable Compound

The monofunctional polymerizable compound may contain a nitrogen-containing monofunctional polymerizable compound. The nitrogen-containing monofunctional polymerizable compound is not particularly limited, and examples thereof include nitrogen-containing monofunctional vinyl monomers such as 5-methyl-3-vinyloxazolidin-2-one (VMOX, another name: 3-vinyl-5-methyl-2-oxazolidinone), N-vinylcaprolactam, N-vinylformamide, N-vinylcarbazole, N-vinylacetamide, and N-vinylpyrrolidone; nitrogen-containing monofunctional acrylate monomers such as acryloylmorpholine; and nitrogen-containing monofunctional acrylamide monomers such as (meth)acrylamides such as (meth)acrylamide, N-hydroxymethyl (meth)acrylamide, diacetone acrylamide, N,N-dimethyl (meth)acrylamide, dimethylaminoethyl acrylate benzyl chloride quaternary salts. Nitrogen-containing monofunctional vinyl monomers are preferable, and 5-methyl-3-vinyloxazolidin-2-one (VMOX) is more preferable in particular. By using such a nitrogen-containing monofunctional polymerizable compound, the adhesion and the curability of printed matter tend to be further improved. In addition, when 5-methyl-3-vinyloxazolidin-2-one (VMOX) is used, the effect of reducing the viscosity of the ink is significant in addition to the effect of improving the adhesion and the curability, which is particularly preferable.

When the nitrogen-containing monofunctional polymerizable compound is contained, the content thereof is preferably 5 to 30% by mass, and more preferably 10 to 20% by mass with respect to the total amount of the ink composition. When the content of the nitrogen-containing monofunctional polymerizable compound is within the above range, the adhesion and the curability of the printed matter tend to be further improved.

### 1.1.2.3 Hydroxy Group-Containing Monofunctional Polymerizable Compound

The monofunctional polymerizable compound may contain a hydroxy group-containing monofunctional polymerizable compound. The hydroxy group-containing monofunctional polymerizable compound is not particularly limited, and examples thereof include 2-hydroxyethyl (meth)acrylate, 2-hydroxypropyl (meth)acrylate, 3-hydroxypropyl acrylate, 2-hydroxybutyl (meth)acrylate, 4-hydroxybutyl (meth)acrylate, ethylene glycol monovinyl ether, diethylene glycol monovinyl ether, and 2-(meth)acryloyloxy-2-hydroxypropyl phthalate, and 4-hydroxybutyl acrylate (4HBA) is more preferable in particular. By using such a hydroxy group-containing monofunctional polymerizable compound, the adhesion and the curability of the printed matter tend to be further improved.

The content of the hydroxy group-containing monofunctional polymerizable compound is preferably 0 to 40% by mass, more preferably 5 to 30% by mass, and even more preferably 10 to 20% by mass with respect to the total amount of the ink composition. When the content of the hydroxy group-containing monofunctional polymerizable compound is within the above range, the adhesion and the curability of the printed matter tend to be further improved. 1.1.2.4 Hydrocarbon Ring-Containing Monofunctional Polymerizable Compound

The monofunctional polymerizable compound may contain a hydrocarbon ring-containing monofunctional polymerizable compound, and more preferably contains a saturated hydrocarbon ring-containing monofunctional polymerizable compound. The hydrocarbon ring-containing monofunctional polymerizable compound is not particularly limited so long as it is a monomer having one or more non-aromatic saturated or unsaturated hydrocarbon rings, and examples thereof include monomers having a monocyclic hydrocarbon group such as tert-butylcyclohexanol acrylate and 1,4-dioxaspiro[4,5]dec-2-ylmethyl 2-(meth)acrylate; monomers having an unsaturated polycyclic hydrocarbon group such as dicyclopentenyl acrylate and dicyclopentenyloxyethyl acrylate; and monomers having a saturated polycyclic hydrocarbon group such as dicyclopentanyl acrylate and isobornyl acrylate (IBXA). Among these, a saturated hydrocarbon ring-containing monofunctional polymerizable compound is preferable, and isobornyl acrylate (IBXA) is preferable in particular. By using such a hydrocarbon ring-containing monofunctional polymerizable compound, especially a saturated hydrocarbon ring-containing monofunctional polymerizable compound, there is a tendency that the shrinkage rate at the time of polymerization is reduced, and the adhesion of the printed matter is further improved.

When the hydrocarbon ring-containing monofunctional polymerizable compound is contained, the content thereof is preferably 5 to 30% by mass, and more preferably 10 to 20% by mass with respect to the total amount of the ink composition. When the content of the hydrocarbon ring-containing monofunctional polymerizable compound, especially the content of the saturated hydrocarbon ring-containing monofunctional polymerizable compound is within the above range, there is a tendency that the shrinkage rate at the time of polymerization is further reduced, and the adhesion of the printed matter is further improved. 1.1.2.5 Ether Ring-Containing Monofunctional Polymerizable Compound

The monofunctional polymerizable compound may contain an ether ring-containing monofunctional polymerizable compound. The ether ring-containing monofunctional polymerizable compound is not particularly limited so long as it contains a cyclic ether skeleton such as tetrahydrofuran or tetrahydropyran, and examples thereof include cyclic trimethylolpropane formal acrylate (CTFA), cyclic trimethylolpropane formal methacrylate, tetrahydrofurfuryl acrylate (THFA), and tetrahydrofurfuryl methacrylate. Among these, cyclic trimethylolpropane formal acrylate (CTFA) and tetrahydrofurfuryl acrylate (THFA) are preferable. When such an ether ring-containing monofunctional polymerizable compound is used, there is a tendency that odors are reduced, and the adhesion of the printed matter can be improved.

When the ether ring-containing monofunctional polymerizable compound is contained, the content thereof is preferably 5 to 30% by mass, and more preferably 10 to 20% by mass with respect to the total amount of the ink composition. When the content of the ether ring-containing monofunctional polymerizable compound is within the above range, there is a tendency that odors are further reduced, and the adhesion of the printed matter can be further improved.

### 1.1.2.6 Aliphatic Group-Containing Polymerizable Compound

The monofunctional polymerizable compound may contain an aliphatic group-containing polymerizable compound. The aliphatic group-containing polymerizable compound is not particularly limited, and examples thereof include a polymerizable compound represented by Formula (2) below.

H₂C=CR⁴-CO-O-R⁵ ··· (2)

where in Formula (2), R⁴ represents hydrogen atom or a methyl group, and R⁵ represents a linear or branched aliphatic group having 4 to 20 carbon atoms.

Such an aliphatic group-containing polymerizable compound is not particularly limited so long as it has a saturated or unsaturated, linear or branched chain having no carbocyclic ring, and examples thereof include isoamyl (meth)acrylate, stearyl (meth)acrylate, lauryl (meth)acrylate, octyl (meth)acrylate, decyl (meth)acrylate, isodecyl (meth)acrylate, isononyl (meth)acrylate, isomyristyl (meth)acrylate, isostearyl (meth)acrylate, 2-hydroxybutyl (meth)acrylate, butoxyethyl (meth)acrylate, 2-hydroxyethyl (meth)acrylate, and 2-hydroxypropyl (meth)acrylate. Among these, an aliphatic group-containing polymerizable compound having a saturated linear or branched chain is preferable, and lauryl (meth)acrylate and isononyl (meth)acrylate are more preferable. By using such an aliphatic group-containing polymerizable compound, the adhesion of the printed matter tends to be improved.

When the aliphatic group-containing polymerizable compound is contained, the content thereof is preferably 5 to 30% by mass, and more preferably 10 to 20% by mass with respect to the total amount of the ink composition. When the content of the aliphatic group-containing polymerizable compound is within the above range, the adhesion of the printed matter tends to be further improved.

### 1.1.2.7 Urethane Acrylate

The monofunctional polymerizable compound may contain a urethane acrylate. The urethane acrylate is not particularly limited so long as it is a (meth)acrylate having a urethane bond, and examples thereof include (methylcarbamoyloxy)ethyl (meth)acrylate, (ethylcarbamoyloxy)ethyl (meth)acrylate, (propylcarbamoyloxy)ethyl (meth)acrylate, (butylcarbamoyloxy)ethyl (meth)acrylate, (methylcarbamoyloxy)ethoxyethyl (meth)acrylate, (ethylcarbamoyloxy)ethoxyethyl (meth)acrylate, (propylcarbamoyloxy)ethoxyethyl (meth)acrylate, and (butylcarbamoyloxy)ethoxyethyl (meth)acrylate. By using the urethane acrylate, the adhesion of the printed matter tends to be improved.

When the urethane acrylate is contained, the content thereof is preferably 5 to 30% by mass, and more preferably 10 to 20% by mass with respect to the total amount of the ink composition. When the content of the urethane acrylate is within the above range, the adhesion of the printed matter tends to be further improved.

### 1.1.2.8 Other Monofunctional Polymerizable Compounds

In addition to the above, the monofunctional polymerizable compound may contain, for example, unsaturated carboxylic acids such as (meth)acrylic acid, itaconic acid, crotonic acid, isocrotonic acid, and maleic acid; salts of the unsaturated carboxylic acids; esters, urethanes, amides, and anhydrides of the unsaturated carboxylic acids; acrylonitrile, styrene, various unsaturated polyesters, unsaturated polyethers, or unsaturated polyamides.

One kind of the monofunctional polymerizable compound may be used alone, or two or more kinds thereof may be used in combination.

Among these, the monofunctional polymerizable compound preferably contains at least one selected from phenoxyethyl acrylate (PEA), 5-methyl-3-vinyloxazolidin-2-one (VMOX), 4-hydroxybutyl acrylate (4HBA), isobornyl acrylate (IBXA), and cyclic trimethylolpropane formal acrylate (CTFA). By containing such a monofunctional polymerizable compound, the adhesion, the curability, and the like of the printed matter tend to be further improved.

### 1.1.3 Oligomer

The polymerizable compound may or may not contain an oligomer. The oligomer is a multimer containing a polymerizable compound as a constituent component, and refers to a polymerizable compound having a molecular weight of more than 1,000 among polymerizable compounds having one or a plurality of polymerizable functional groups. It is noted that a polymerizable compound having a molecular weight of 1,000 or less is a monomer. When the polymerizable compound contains the oligomer, the viscosity may be further decreased, and the abrasion resistance and the like may be further improved.

Such an oligomer is not particularly limited, and examples thereof include a urethane acrylate oligomer having a urethane repeating structure, a polyester acrylate oligomer having an ester repeating structure, an epoxy acrylate oligomer having an epoxy repeating structure, and an amine-modified oligomer.

Among these, a urethane acrylate oligomer is preferable, an aliphatic urethane acrylate oligomer and an aromatic urethane acrylate oligomer are more preferable, and an aliphatic urethane acrylate oligomer is even more preferable. The urethane acrylate oligomer is preferably a tetra- or less functional urethane acrylate oligomer, and more preferably a bifunctional urethane acrylate oligomer. By using such an oligomer, there is a tendency that the viscosity is further decreased, and the abrasion resistance and the like are further improved.

The radiation-curable ink jet ink composition according to the present embodiment may contain an amine-modified oligomer, but from the viewpoint of improving the ejection stability without increasing the viscosity of the radiation-curable ink jet ink composition, it is preferable that the ink composition does not contain an amine-modified oligomer or contains it in a small amount. The content thereof when contained is preferably more than 0% by mass and 5% by mass or less, more preferably more than 0% by mass and less than 1% by mass, even more preferably more than 0% by mass and 0.9% by mass or less, and particularly preferably more than 0% by mass and 0.5% by mass or less with respect to the total amount of the ink composition.

The amine-modified oligomer is an oligomer having one or more amino groups in the molecule. The amine-modified oligomer may contain one or more functional groups other than an amino group, and preferably contains two or more functional groups other than an amino group.

Examples of the amine-modified oligomer include an amine-modified (meth)acrylate oligomer.

The content of the amine-modified oligomer is preferably less than 5% by mass, more preferably less than 3% by mass, even more preferably less than 2% by mass, particularly preferably less than 1% by mass, more particularly preferably 0.9% by mass or less, particularly preferably 0.5% by mass or less, and even more preferably 0% by mass or less with respect to the total amount of the ink composition. When the content of the amine-modified oligomer is less than 5% by mass, the curability can be improved without increasing the viscosity of the radiation-curable ink jet ink composition.

The content of the amine-modified oligomer when contained is more than 0% by mass with respect to the total amount of the ink composition, and may be 0.5% by mass or more, 1% by mass or more, or 2% by mass or more.

Examples of the commercially available product of the amine-modified oligomer include CN371 NS, CN373, CN374, CN383, CN386, CN550, and CN551 (all of which are product names, manufactured by Sartomer Company Inc.), PHOTOMER (registered trademark) 4771, PHOTOMER 4250, and PHOTOMER 4068 (all of which are manufactured by IGM Resins B.V.), EBECRYL (registered trademark) 80, EBECRYL 7100, and EBECRYL P115 (all of which are manufactured by Daicel-Allnex Ltd.), and LAROMER (registered trademark) PO 77F, LAROMER PO 8996, and LAROMER PO 94F (all of which are manufactured by BASF).

Examples of the commercially available product of the oligomer include CN9893 (bifunctional aliphatic urethane oligomer, manufactured by Sartomer Company Inc.).

The content of the oligomer when used is preferably 0.5 to 10% by mass, more preferably 0.5 to 5% by mass, and even more preferably 1 to 3% by mass with respect to the total amount of the ink composition. When the content is within the above range, the viscosity may be further decreased, and the abrasion resistance and the like may be further improved.

The content of the oligomer when used is preferably 0.5 to 10% by mass, more preferably 0.9 to 5% by mass, and even more preferably 1 to 2% by mass with respect to the total amount of the monomer in the ink composition. When the content is within the above range, the viscosity may be further decreased, and the abrasion resistance and the like may be further improved.

### 1.2 Photopolymerization Initiator

The radiation-curable ink jet ink composition according to the present embodiment contains a photopolymerization initiator, and the photopolymerization initiator contains (2,4,6-trimethylbenzoyl) bis(p-tolyl)phosphine oxide, in which the content of (2,4,6-trimethylbenzoyl)bis(p-tolyl)phosphine oxide is 3% by mass or more with respect to the total amount of the ink composition.

The photopolymerization initiator is a compound that generates active species by irradiation with radiation.

In the radiation-curable ink jet ink composition according to the present embodiment, the content of the photopolymerization initiator is 3% by mass or more with respect to the total amount of the ink composition, and is preferably 5% by mass or more, more preferably 7% by mass or more, even more preferably 9% by mass or more, and particularly preferably 10% by mass or more.

The upper limit of the content of the photopolymerization initiator is not particularly limited, and is preferably 20% by mass or less, more preferably 17% by mass or less, even more preferably 15% by mass or less, and particularly preferably 12% by mass or less with respect to the total amount of the ink composition.

### 1.2.1 TMO

The photopolymerization initiator contains (2,4,6-trimethylbenzoyl)bis(p-tolyl)phosphine oxide (TMO). (2,4,6-Trimethylbenzoyl)bis(p-tolyl)phosphine oxide is a compound represented by the following chemical formula (CAS 270586-78-2). When the photopolymerization initiator contains (2,4,6-trimethylbenzoyl)bis(p-tolyl)phosphine oxide in a predetermined amount or more, the storage stability of the ink composition in high-temperature and low-temperature environments can be excellent.

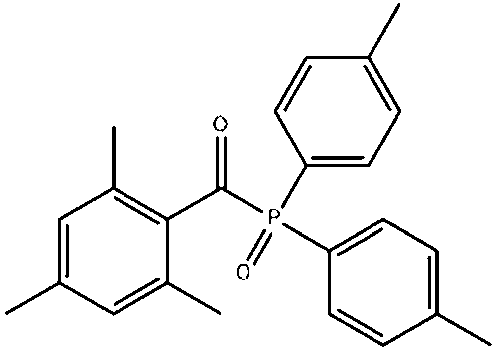

In the radiation-curable ink jet ink composition according to the present embodiment, the content of (2,4,6-trimethylbenzoyl)bis(p-tolyl)phosphine oxide is 3% by mass or more with respect to the total amount of the ink composition, and is preferably 5% by mass or more, more preferably 7% by mass or more, even more preferably 9% by mass or more, and particularly preferably 10% by mass or more. When the content of (2,4,6-trimethylbenzoyl)bis(p-tolyl)phosphine oxide is within the above range, the storage stability of the ink composition in high-temperature and low-temperature environments tends to have more excellent.

The upper limit of the content of (2,4,6-trimethylbenzoyl)bis(p-tolyl)phosphine oxide is not particularly limited, and is preferably 20% by mass or less, more preferably 17% by mass or less, even more preferably 15% by mass or less, and particularly preferably 12% by mass or less with respect to the total amount of the ink composition.

The content of (2,4,6-trimethylbenzoyl)bis(p-tolyl)phosphine oxide is preferably 30% by mass or more, more preferably 50% by mass or more, and even more preferably 70% by mass or more with respect to the total amount of the photopolymerization initiator.

### 1.2.2 Other Photopolymerization Initiators

The photopolymerization initiator may contain other photopolymerization initiators other than (2,4,6-trimethylbenzoyl)bis(p-tolyl) phosphine oxide (TMO). Examples of the other photopolymerization initiators include known polymerization initiators such as an acylphosphine oxide-based polymerization initiator (excluding TMO), a thioxanthone-based polymerization initiator, an alkylphenone-based polymerization initiator, and a benzophenone-based polymerization initiator. Among these, an acylphosphine oxide-based polymerization initiator and a thioxanthone-based polymerization initiator are preferable, and an acylphosphine oxide-based polymerization initiator is more preferable. One kind of the photopolymerization initiator may be used alone, or two or more kinds thereof may be used in combination.

The acylphosphine oxide-based polymerization initiator is not particularly limited, and examples thereof include ethyl 2,4,6-trimethylbenzoylphenylphosphinate (TPO-L), 2,4,6-trimethylbenzoyldiphenylphosphine oxide, bis(2,4,6-trimethylbenzoyl)-phenylphosphine oxide (819), and bis(2,6-dimethoxybenzoyl)-2,4,4-trimethylpentylphosphine oxide.

Examples of the commercially available product of such an acylphosphine oxide-based polymerization initiator include Omnirad TPO-L (ethyl 2,4,6-trimethylbenzoylphenylphosphinate), Omnirad 819 (bis(2,4,6-trimethylbenzoyl)-phenylphosphine oxide), and Omnirad TPO (2,4,6-trimethylbenzoyldiphenylphosphine oxide) (all of which are product names, manufactured by IGM Resins B.V.); and IRGACURE 1800 (a mixture of bis(2,6-dimethoxybenzoyl)-2,4,4-trimethylpentylphosphine oxide and 1-hydroxycyclohexyl-phenyl ketone in a mass ratio of 25:75 (product name, manufactured by Ciba Specialty Chemicals).

The thioxanthone-based polymerization initiator is not particularly limited, and examples thereof include thioxanthone, 2-methylthioxanthone, 2,4-diethylthioxanthone, 2-isopropylthioxanthone, 4-isopropylthioxanthone, 2-chlorothioxanthone, 2,4-diethylthioxanthone, 2,4-diethylthioxanthen-9-one (another name: 2,4-diethyl-9H-thioxanthen-9-one), diesters of carboxymethoxythioxanthone and polytetramethylene glycol, 1,3-di({α-[1-chloro-9-oxo-9H-thioxanthen-4-yl]oxy}acetylpoly[oxy(1-methylethylene)])oxy)-2,2-bis({α-[1-chloro-9-oxo-9H-thioxanthen-4-yl]oxy}acetylpoly[oxy(1-methylethylene)])oxymethylpropane.

It is noted that the thioxanthone-based polymerization initiator may be used as a sensitizer in combination with the photopolymerization initiator. The content of the sensitizer is preferably 0.1% by mass or more, more preferably 0.5 to 10% by mass, and even more preferably 1.0 to 5.0% by mass with respect to the total amount of the ink composition. Examples of the commercially available product of the sensitizer include Speedcure DETX (manufactured by Lambson, 2,4-diethylthioxanthen-9-on).

The alkylphenone-based polymerization initiator is not particularly limited, and examples thereof include 2-hydroxy-1-(4-(4-(2-hydroxy-2-methylpropionyl)benzyl)phenyl)-2-methylpropan-1-one, 2-benzyl-2-dimethylamino-1-(4-morpholinophenyl)-butanone-1,2-(dimethylamino)-2-[(4-methylphenyl)methyl]-1-[4-(4-morpholinyl)phenyl]-1-butanone, and 2-methyl-1-(4-methylthiophenyl)-2-morpholinopropan-1-one.

The benzophenone-based polymerization initiator is not particularly limited, and examples thereof include 4,4'-bis(diethylamino)benzophenone, 4-chlorobenzophenone, 4,4'-dimethoxybenzophenone, and 4,4'-diaminobenzophenone.

When the photopolymerization initiator contains the other photopolymerization initiators, the content of the other photopolymerization initiators is preferably 10% by mass or less, more preferably 7% by mass or less, even more preferably 5% by mass or less, and particularly preferably 3% by mass or less with respect to the total amount of the ink composition. The lower limit thereof is not particularly limited, and is preferably 0.1% by mass or more, more preferably 0.5% by mass or more, and even more preferably 1.0% by mass or more with respect to the total amount of the ink composition.

Even when the photopolymerization initiator contains a compound other than (2,4,6-trimethylbenzoyl)bis(p-tolyl)phosphine oxide (TMO), there is a tendency that the storage stability of the ink composition in high-temperature and low-temperature environments can be excellent so long as the content is the above content.

### 1.3 Polymerization Inhibitor

The radiation-curable ink jet ink composition according to the present embodiment may contain a polymerization inhibitor from the viewpoint that the storage stability of the ink composition can be further improved. One kind of the polymerization inhibitor may be used alone, or two or more kinds thereof may be used in combination.

Examples of the polymerization inhibitor include, but not limited to, bis(2,2,6,6-tetramethyl-4-piperidyl-1-oxyl) sebacate (BisTEMPO sebacate), 2,2,6,6-tetramethyl-4-hydroxypiperidine-1-oxyl (OH-TEMPO), p-methoxyphenol, hydroquinone monomethyl ether (MEHQ), 4-hydroxy-2,2,6,6-tetramethylpiperidine-N-oxyl, hydroquinone, cresol, t-butylcatechol, 3,5-di-t-butyl-4-hydroxytoluene, 2,2'-methylenebis(4-methyl-6-t-butylphenol), 2,2'-methylenebis(4-ethyl-6-butylphenol), 4,4'-thiobis(3-methyl-6-t-butylphenol), and a hindered amine compound.

Examples of the commercially available product of the polymerization inhibitor include ADK STAB LA-7RD (2,2,6,6-tetramethyl-4-hydroxypiperidine-1-oxyl), LA-52, LA-57, LA-62, LA-63P, LA-68LD, LA-77Y, LA-77G, LA-81, LA-82 (1,2,2,6,6-pentamethyl-4-piperidyl methacrylate), LA-87 (all of which are product names, manufactured by ADEKA Corporation), IRGASTAB UV 10 (4,4'-[1,10 dioxo-1,10-decanediyl)bis(oxy)]bis[2,2,6,6-tetramethyl]-1-piperidinyloxy) (CAS. 2516 92-9), TINUVIN 123 (4-hydroxy-2,2,6,6-tetramethylpiperidine-N-oxyl), TINUVIN 111FDL, TINUVIN 144, TINUVIN 152, TINUVIN 292, TINUVIN 765, TINUVIN 770DF, TINUVIN 5100, SANOL LS-2626, CHIMASSORB 119FL, CHIMASSORB 2020 FDL, CHIMASSORB 944 FDL, TINUVIN 622 LD (all of which are product names, manufactured by BASF), FA-711HM and FA-712HM (2,2,6,6-tetramethylpiperidinyl methacrylate, (product names, manufactured by Hitachi Chemical Co., Ltd., and UV-10 (or, (product name, manufactured by Seiko Chemical Co., Ltd.).

The polymerization inhibitor preferably contains a TEMPO (2,2,6,6-tetramethylpiperidine-N-oxyl)-based polymerization inhibitor. TEMPO has free radicals that are stable at room temperature, and thus has a high radical scavenging ability, and there is a tendency that the storage stability of the ink composition can be excellently improved.

Examples of the TEMPO-based polymerization inhibitor include 4-benzoyloxy TEMPO (4-benzoyloxy-2,2,6,6-tetramethylpiperidine-1-oxyl free radical), BisTEMPO sebacate (bis(2,2,6,6-tetramethyl-4-piperidyl-1-oxyl) sebacate), 4-MCTEMPO (4-cyclohexylcarbonyloxy-2,2,6,6-tetramethylpiperidine-1-oxyl free radical), 4-AcTEMPO (4-acetyloxy-2,2,6,6-tetramethylpiperidine-1-oxyl free radical), EGG-TEMPO (a mixture of 4-[2-hydroxypropoxy-3-(2-hydroxyethoxy)]-TEMPO and 4-[3-hydroxypropoxy-2-(2-hydroxyethoxy)]-TEMPO), G-TEMPO (4-glycidyloxy-2,2,6,6-tetramethylpiperidine-1-oxyl free radical), and OH-TEMPO (2,2,6,6-tetra methyl-4-hydroxypiperidine-1-oxyl).

In particular, the polymerization inhibitor more preferably contains any one or more selected from bis(2,2,6,6-tetramethyl-4-piperidyl-1-oxyl) sebacate and 2,2,6,6-tetramethyl-4-hydroxypiperidine-1-oxyl. When the polymerization inhibitor contains these compounds, there is a tendency that the storage stability of the ink composition can be more excellently improved.

The content of the polymerization inhibitor is preferably 0.01% by mass or more and 1.0% by mass or less, more preferably 0.1% by mass or more and 0.5% by mass or less, and even more preferably 0.1% by mass or more and 0.2% by mass or less with respect to the total amount of the ink composition.

The content of the TEMPO-based polymerization inhibitor is preferably 0.001% by mass or more and 1.0% by mass or less, more preferably 0.01% by mass or more and 0.5% by mass or less, and even more preferably 0.02% by mass or more and 0.1% by mass or less with respect to the total amount of the ink composition.

### 1.4 Fluorescent Brightener

The radiation-curable ink jet ink composition according to the present embodiment may contain a fluorescent brightener. By containing the fluorescent brightener, the yellowing of the cured article can be inhibited in some cases. Further, by containing the fluorescent brightener, the curability can be more excellent, and the whiteness of the cured article can be improved in some cases. It is noted that the yellowing of the cured article can be determined, for example, with a general-purpose colorimeter.

Examples of the fluorescent brightener include, but not limited to, naphthalene benzoxazolyl derivatives such as 1,4-bis(2-benzoxazolyl)naphthalene, thiophene benzoxazolyl derivatives such as 2,5-thiophenediylbis(5-tert-butyl-1,3-benzoxazole), stilbene benzoxazolyl derivatives, coumarin derivatives, styrene biphenyl derivatives, pyrazolone derivatives, stilbene derivatives, styryl derivatives of benzene and biphenyl, bis(benzoxazol-2-yl) derivatives, carbostyril, naphthalimide, derivatives of dibenzothiophene-5,5'-dioxide, pyrene derivatives, and pyridotriazole.

Examples of the commercially available product of the fluorescent brightener include Telalux OB, Telalux KCB, Telalux KS, and Telalux KS-N (all of which are manufactured by Clariant Japan K.K.); and Tinopal OB-CO and Tinopal NFW LIQ (all of which are manufactured by BASF).

The fluorescent brightener is preferably used in combination with an acylphosphine oxide-based polymerization initiator (including TMO). Consequently, there is a tendency that the curability can be even further improved.

The content of the fluorescent brightener when used is preferably 0.01% by mass or more and 1.0% by mass or less, and more preferably 0.10% by mass or more and 0.50% by mass or less with respect to the total amount of the ink composition.

### 1.5 Coloring Material

The radiation-curable ink jet ink composition according to the present embodiment may further contain a coloring material. As the coloring material, at least one of a pigment and a dye can be used.

The total amount of the coloring materials is preferably 0.1% by mass or more and 10.0% by mass or less, and more preferably 0.5% by mass or more and 5.0% by mass or less with respect to the total amount of the ink composition. It is noted that the radiation-curable ink jet ink composition according to the present embodiment may be a clear ink that does not contain a coloring material or contains a coloring material to the extent that coloring is not intended (for example, 0.1% by mass or less).

It is noted that when a pigment is used, a pigment dispersion liquid may be prepared in advance, and the pigment dispersion liquid may be used in the radiation-curable ink jet ink composition. The pigment dispersion liquid may contain a polymerizable compound, a dispersant (described later) for dispersing the pigment, and the like.

### 1.5.1 Pigment

When a pigment is used as the coloring material, the weather resistance of the ink composition may be improved. Examples of the pigment include an inorganic pigment and an organic pigment.

As the inorganic pigment, carbon blacks such as C.I. Pigment Black 6 (lamp black, vegetable black), C.I. Pigment Black 7 (furnace black, channel black, thermal black, acetylene black), C.I. Pigment Black 8 (charcoal black), and C.I. Pigment Black 10 (graphite), iron oxide, titanium oxide, zinc oxide, and silica can be used.

Examples of the carbon black include No. 2300, 900, MCF88, No. 20B, No. 33, No. 40, No. 45, No. 52, MA7, MA8, MA100, and No2200B manufactured by Mitsubishi Chemical Corporation. Examples thereof also include Color Black FW1, FW2, FW2V, FW18, FW200, S150, S160, and S170, Printex 35, U, V, and 140U, and Special Black 6, 5, 4A, 4, and 250 manufactured by Degussa Corporation. Examples thereof also include Conductex SC and Raven 1255, 5750, 5250, 5000, 3500, 1255, and 700 manufactured by Columbia Carbon Company. Examples thereof also include Regal 400R, 330R, and 660R, Mogul L, Monarch 700, 800, 880, 900, 1000, 1100, 1300, and 1400, and Elftex 12 manufactured by Cabot Corporation.

Examples of the organic pigment include a quinacridone-based pigment, a quinacridone quinone-based pigment, a dioxazine-based pigment, a phthalocyanine-based pigment, an anthrapyrimidine-based pigment, an anthanthrone-based pigment, an indanthrone-based pigment, a flavanthrone-based pigment, a perylene-based pigment, a diketopyrrolopyrrole-based pigment, a perinone-based pigment, a quinophthalone-based pigment, an anthraquinone-based pigment, a thioindigo-based pigment, a benzimidazolone-based pigment, an isoindolinone-based pigment, an azomethine-based pigment, and an azo-based pigment.

Specific examples of organic pigment include the following.

Examples of a cyan pigment include C.I. Pigment Blue 1, 2, 3, 15:3, 15:4, 15:34, 16, 22, and 60; and C.I. Vat Blue 4 and 60, and preferable examples include one or a mixture of two or more selected from the group consisting of C.I. Pigment Blue 15:3, 15:4, and 60.

Examples of a magenta pigment include C.I. Pigment Red 5, 7, 12, 48, 48, 57, 57:1, 112, 122, 123, 168, 184, and 202; and C.I. Pigment Violet 19, and preferable examples include one or a mixture of two or more selected from the group consisting of C.I. Pigment Red 122, 202, and 209, and C.I. Pigment Violet 19. A solid solution of the pigment is also favorable.

Examples of a yellow pigment include C.I. Pigment Yellow 1, 2, 3, 12, 13, 14C, 16, 17, 73, 74, 75, 83, 93, 95, 97, 98, 119, 110, 114, 128, 129, 138, 150, 151, 154, 155, 180, and 185, and preferable examples include one or a mixture of two or more selected from the group consisting of C.I. Pigment Yellow 74, 109, 110, 128, 138, 155, and 180.

Examples of an orange pigment include C.I. Pigment Orange 36 and 43, and a mixture thereof. Examples of a green pigment include C.I. Pigment Green 7 and 36, and a mixture thereof.

In addition, a bright pigment may be used, which is not particularly limited so long as it is capable of exhibiting brightness when attached to a medium, and examples thereof include metal particles of one or two or more alloys (also referred to as a metal pigment) selected from the group consisting of aluminum, silver, gold, platinum, nickel, chromium, tin, zinc, indium, titanium, and copper, and a pearl pigment having pearl gloss. Representative examples of the pearl pigment include a pigment having pearl gloss or interference gloss such as titanium dioxide-coated mica, fish scale foil, and bismuth oxychloride. In addition, the bright pigment may be subjected to a surface treatment for inhibiting a reaction with water.

In addition, a white pigment may be used, and examples thereof include metal compounds such as a metal oxide, barium sulfate, and calcium carbonate. Examples of the metal oxide include titanium dioxide, zinc oxide, silica, alumina, and magnesium oxide. In addition, particles having a hollow structure may be used for the white pigment.

One kind of the pigment may be used alone, or two or more kinds thereof may be used in combination. The pigment is preferably an organic pigment from the viewpoint of storage stability such as light resistance, weather resistance, and gas resistance.

The radiation-curable ink jet ink composition according to the present embodiment is preferably a black ink or a yellow ink from the viewpoint that the present disclosure is more effective. When the ink composition is a black ink, the ink composition preferably contains a carbon black as the coloring material. When the ink composition is a yellow ink, the ink composition preferably a yellow pigment as the coloring material.

The coloring material used in the black ink or the yellow ink, especially the carbon black or the yellow pigment is easily affected by a functional group on the surface of the coloring material, and it is more difficult to maintain dispersion stability than other coloring materials. Liquid photopolymerization initiators such as TPO-L contain many impurities, and thus the impurities react with the functional group on the surface of the coloring material, and the storage stability of the ink composition in a high-temperature environment is likely to be poor. On the other hand, since the radiation-curable ink jet ink composition according to the present embodiment contains TMO, it is possible to make the storage stability of the ink composition in a high-temperature environment excellent even in the case of the black ink or the yellow ink.

For the volume average particle size (D50) of the pigment, a volume average particle size (D50) when measured by a dynamic light scattering method is 20 nm or more and 300 nm or less, the volume average particle size (D50) is more preferably 30 nm or more and 200 nm or less, and the volume average particle size (D50) is even more preferably 40 nm or more and 100 nm or less.

The measurement of the volume average particle size may be performed by using, for example, a Nanotrac series particle size distribution measurement apparatus manufactured by MicrotracBEL Corporation. In addition, examples of the method for adjusting the volume average particle size include a method of adjusting the degree of pulverization of a pigment before dispersion, an adjustment method by stirring conditions (for example, stirring speed, stirring temperature, and the like) during dispersion, and an adjustment method by filtration using a filter after dispersion.

When the radiation-curable ink jet ink composition contains a pigment, a dispersant may be further contained in order to further improve the pigment dispersibility. One kind of the dispersant may be used alone, or two or more kinds thereof may be used in combination.

The dispersant is not particularly limited, and examples thereof include dispersants that are commonly used to prepare pigment dispersion liquids, such as a polymer dispersant. Specific examples thereof include those containing, as a main component, one or more of polyoxyalkylene, polyalkylene polyamine, a vinyl-based polymer and copolymer, an acrylic polymer and copolymer, polyester, polyamide, polyimide, polyurethane, an amino-based polymer, a silicon-containing polymer, a sulfur-containing polymer, a fluorine-containing polymer, and an epoxy resin.

Examples of the commercially available product of the polymer dispersant include Ajisper series manufactured by Ajinomoto Fine-Techno Co., Inc., Solsperse series (Solsperse 36000 and the like) available from Avecia or Noveon, Disperbyk series manufactured by BYK Additives & Instruments, and Disparlon series manufactured by Kusumoto Chemicals, Ltd.

The content of the dispersant when used is preferably 0.01% by mass or more and 5.0% by mass or less, more preferably 0.1% by mass or more and 4.0% by mass or less, even more preferably 0.5% by mass or more and 3.0% by mass or less, and particularly preferably 1.0% by mass or more and 2.0% by mass or less with respect to the total amount of the ink composition.

### 1.5.2 Dye

A dye may be used as the coloring material. The dye is not particularly limited, and an acid dye, a direct dye, a reactive dye, and a basic dye can be used. One kind of the dye may be used alone, or two or more kinds thereof may be used in combination.

The dye is not particularly limited, and examples thereof include C.I. Acid Yellow 17, 23, 42, 44, 79, and 142, C.I. Acid Red 52, 80, 82, 249, 254, and 289, C.I. Acid Blue 9, 45, and 249, C.I. Acid Black 1, 2, 24, and 94, C.I. Food Black 1 and 2, C.I. Direct Yellow 1, 12, 24, 33, 50, 55, 58, 86, 132, 142, 144, and 173, C.I. Direct Red 1, 4, 9, 80, 81, 225, and 227, C.I. Direct Blue 1, 2, 15, 71, 86, 87, 98, 165, 199, and 202, C.I. Direct Black 19, 38, 51, 71, 154, 168, 171, and 195, C.I. Reactive Red 14, 32, 55, 79, and 249, and C.I. Reactive Black 3, 4, and 35.

### 1.6 Surfactant

The radiation-curable ink jet ink composition according to the present embodiment may contain a surfactant. The surfactant is not particularly limited, and examples thereof include an acetylene glycol-based surfactant, a fluorine-based surfactant, and a silicone-based surfactant.

The acetylene glycol-based surfactant is not particularly limited, and examples thereof include 2,4,7,9-tetramethyl-5-decyne-4,7-diol and alkylene oxide adducts of 2,4,7,9-tetramethyl-5-decyne-4,7-diol, and 2,4-dimethyl-5-decyne-4-ol and alkylene oxide adducts of 2,4-dimethyl-5-decyne-4-ol.

The fluorine-based surfactant is not particularly limited, and examples thereof include a perfluoroalkyl sulfonate, a perfluoroalkyl carboxylate, a perfluoroalkyl phosphonate, a perfluoroalkyl ethylene oxide adduct, a perfluoroalkyl betaine, and a perfluoroalkyl amine oxide compound.

Examples of the silicone-based surfactant include a polysiloxane-based compound, a polyester-modified silicone, and a polyether-modified organosiloxane. Examples of the polyester-modified silicone include BYK 347, 348, 3510, and 3530 (all of which are manufactured by BYK Additives & Instruments), and examples of the polyether-modified silicone include BYK-3570 and BYK-UV3500 (manufactured by BYK Additives & Instruments).

The content of the surfactant is preferably 0.1 to 1% by mass, and more preferably 0.2 to 0.8% by mass with respect to the total mass of the ink composition. When the content of the surfactant is within the above range, the wettability of the ink composition tends to be further improved.

### 1.7 Other Components

The radiation-curable ink jet ink composition according to the present embodiment may further contain various additives such as a chain transfer agent, a crosslinking agent, an antioxidant, a preservative, a flame retardant, an antistatic agent, and an organic or inorganic filler as needed.

The content of such additives is not particularly limited, and is preferably 0.01% by mass to 20% by mass, more preferably 0.1% by mass to 15% by mass, even more preferably 1% by mass to 10% by mass, and particularly preferably 2% by mass to 5% by mass.

### 1.8 Physical Properties

The viscosity at 20°C of the radiation-curable ink jet ink composition according to the present embodiment is preferably less than 30 mPa·s, more preferably less than 20 mPa·s, and even more preferably less than 10 mPa·s. When the viscosity at 20°C of the ink composition is within the above range, an appropriate amount of the ink composition is ejected from a nozzle, and the flight deflection or scattering of the ink composition can be further reduced, and thus the ink composition can be suitably used in an ink jet recording apparatus.

It is noted that the viscosity can be measured, for example, by increasing the Shear Rate from 10 to 1,000 and reading a viscosity at a Shear Rate of 200 using a viscoelasticity tester MCR-300 (manufactured by Physica) in an environment of 20°C.

The surface tension at 20°C of the radiation-curable ink jet ink composition according to the present embodiment is preferably 20 mN/m or more and 40 mN/m or less. When the surface tension at 20°C of the radiation-curable ink jet ink composition is within this range, the ink composition is less likely to wet a nozzle surface subjected to a liquid repellency treatment. Consequently, since the ink composition is normally ejected from the nozzle in an appropriate amount, and it is possible to further reduce the flight deflection or scattering of the ink composition, the ink composition can be suitably used in the ink jet recording apparatus.

It is noted that the surface tension can be measured, for example, by determining the surface tension when a platinum plate is wetted with the radiation-curable ink jet ink composition in an environment of 20°C using an automatic surface tensiometer CBVP-Z (manufactured by Kyowa Interface Science Co., Ltd.).

### 1.9 Production Method

The radiation-curable ink jet ink composition can be produced (prepared), for example, by mixing the components contained in the ink composition and stirring the mixture such that the components are sufficiently uniformly mixed. In the present embodiment, the preparation of the radiation-curable ink jet ink composition preferably includes a step of subjecting a mixture obtained by mixing at least part of the polymerizable compound to at least one of an ultrasonic treatment and a heating treatment in the preparation process. Consequently, the amount of dissolved oxygen in the ink composition after preparation can be reduced, and a radiation-curable ink jet ink composition having excellent ejection stability and storage stability can be obtained in some cases. The mixture may contain at least the above components, and may further contain other components contained in the radiation-curable ink jet ink composition, or may contain all the components contained in the radiation-curable ink jet ink composition. The polymerizable compound contained in the mixture may be at least part of the polymerizable compound contained in the radiation-curable ink jet ink composition.

### 2. Recording Apparatus

A recording apparatus in which the above-described radiation-curable ink jet ink composition can be suitably used will be described.

The recording apparatus according to the present embodiment preferably includes an ink jet head that ejects the above-described radiation-curable ink jet ink composition and the above-described radiation-curable ink jet ink composition. In addition, the recording apparatus according to the present embodiment may include a radiation source that irradiates the ink composition with radiation.

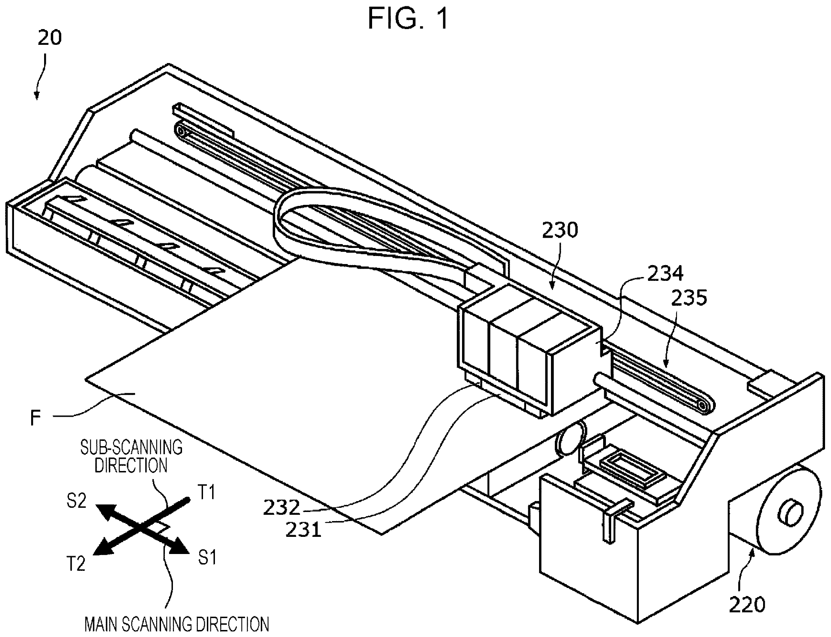

As an example of the recording apparatus, FIG. 1 shows a perspective view of a serial printer. As shown in FIG. 1, a serial printer 20 includes a transport section 220 and a recording section 230. The transport section 220 transports a recording medium F fed to the serial printer to the recording section 230, and discharges the recording medium after recording to the outside of the serial printer. Specifically, the transport section 220 includes feed rollers, and transports the fed recording medium F in a sub-scanning direction T2.

The recording section 230 includes an ink jet head 231 that ejects the above-described radiation-curable ink jet ink composition to the recording medium F fed from the transport section 220, a radiation source 232 that irradiates the attached ink composition with radiation, a carriage 234 on which these are mounted, and a carriage movement mechanism 235 that moves the carriage 234 in main scanning directions S1 and S2 of the recording medium F.

In the case of the serial printer, a head having a length smaller than the width of the recording medium is provided as the ink jet head 231, the head moves, and recording is performed in one or two or more passes. In addition, in the serial printer, the head 231 and the radiation source 232 are mounted on the carriage 234 that moves in a predetermined direction, and the ink composition is ejected onto the recording medium by the head moving along with the movement of the carriage. Consequently, recording is performed in one or two or more passes. It is noted that the pass is also referred to as main scanning. Sub-scanning that transports the recording medium may be performed between a pass and a pass. That is, the main scanning and the sub-scanning are alternately performed.

It is noted that FIG. 1 shows an aspect in which the radiation source is mounted on the carriage, but this is not limiting, and a radiation source that is not mounted on the carriage may be included.

In addition, the recording apparatus of the present embodiment is not limited to the serial type printer, and may be a line type printer.

### 3. Examples

Hereinafter, the present disclosure will be described in more detail with reference to Examples, but the present disclosure is not limited to these examples. Hereinafter, "%" is based on mass unless otherwise specified.

### 3.1 Preparation of Radiation-Curable Ink Jet Ink Composition

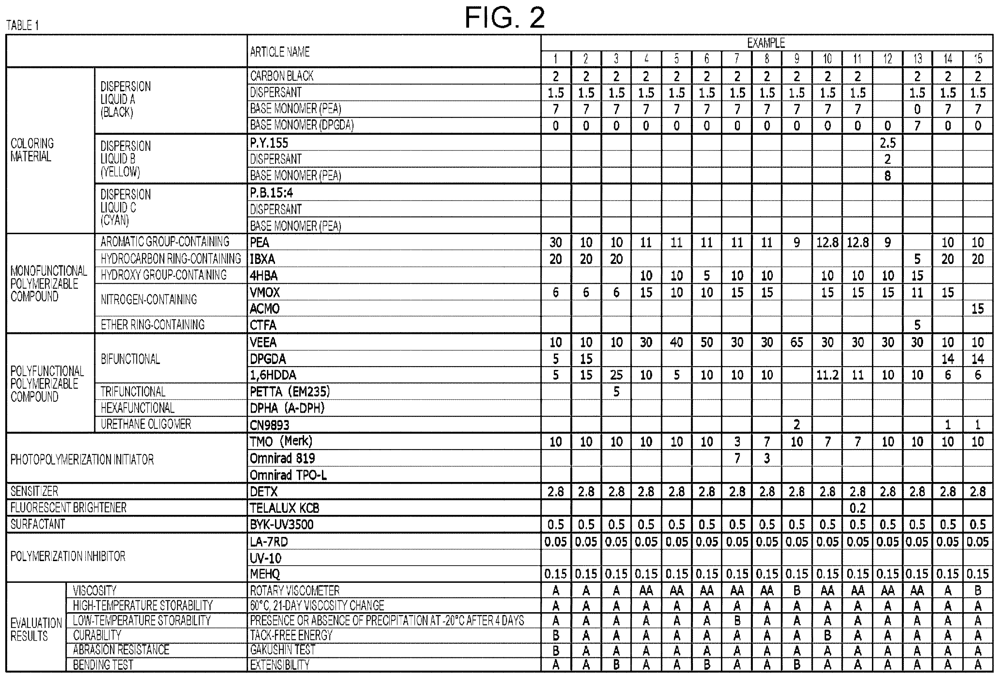

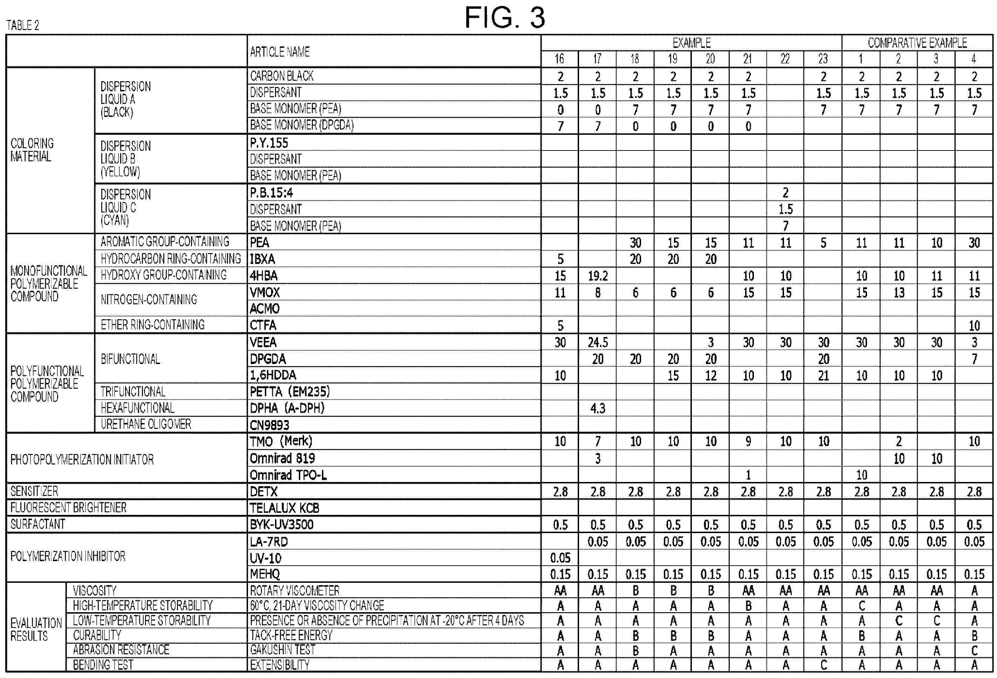

First, a pigment, a dispersant, and part of a polymerizable compound (a base monomer) are weighed and put into a pigment dispersing tank, and ceramic beads with a diameter of 1 mm are put into the tank and stirred to obtain a pigment dispersion liquid in which the pigment is dispersed in the base monomer. Next, the rest of the polymerizable compound, a photopolymerization initiator, a sensitizer, a fluorescent brightener, a surfactant, and a polymerization inhibitor are put into a mixture tank, which is a stainless steel container, so as to have the composition described in Table 1 (FIG. 2) or Table 2 (FIG. 3), mixed and stirred to be completely dissolved, and then the pigment dispersion liquid obtained above is put thereinto, further mixed and stirred at room temperature for 1 hour, and further filtered with a 5 µm membrane filter to obtain a radiation-curable ink jet ink composition according to each example. It is noted that the numerical value of each component in the tables is indicated in terms of % by mass.

Explanations regarding Table 1 and Table 2 will be supplemented.

### Dispersion Liquid

P.Y.155: C.I. Pigment Yellow 155
P.B.15:4: C.I. Pigment Blue 15:4
Dispersant: product name "Solsperse 32000", manufactured by Lubrizol Japan Limited, polymer dispersant, amine value: 35
Monofunctional Polymerizable Compound
PEA: phenoxyethyl acrylate, product name "Viscoat #192", manufactured by Osaka Organic Chemical Industry Ltd.
IBXA: isobornyl acrylate, manufactured by Osaka Organic Chemical Industry Ltd.
4HBA: 4-hydroxybutyl acrylate, manufactured by Osaka Organic Chemical Industry Ltd.
VMOX: 5-methyl-3-vinyloxazolidin-2-one, manufactured by BASF Japan
ACMO: acryloylmorpholine, manufactured by Tokyo Chemical Industry Co., Ltd.
CTFA: cyclic trimethylolpropane formal acrylate, product name "Viscoat #200", manufactured by Osaka Organic Chemical Industry Ltd.

### Polyfunctional Polymerizable Compound

VEEA: 2-(2-vinyloxyethoxy)ethyl acrylate, manufactured by Nippon Shokubai Co., Ltd.
DPGDA: dipropylene glycol diacrylate, product name "SR508NS", manufactured by Sartomer Company Inc.
1,6HDDA: 1,6-hexanediol diacrylate, product name "SR238NS", manufactured by Sartomer Company Inc.
PETTA: pentaerythritol triacrylate, product name "EM235", manufactured by Eternal Materials
DPHA: dipentaerythritol hexaacrylate, product name "A-DPH", manufactured by Shin-Nakamura Chemical Co., Ltd.
CN9893: bifunctional aliphatic urethane oligomer, product name "CN9893 NS", manufactured by Sartomer Company Inc.

### Photopolymerization Initiator

TMO: (2,4,6-trimethylbenzoyl)bis(p-tolyl)phosphine oxide, manufactured by Merck
Omnirad 819: product name manufactured by IGM, bis(2,4,6-trimethylbenzoyl)-phenylphosphine oxide
Omnirad TPO-L: product name manufactured by IGM, ethyl phenyl(2,4,6-trimethylbenzoyl) phosphinate

### Sensitizer

DETX: product name "Speedcure DETX", manufactured by Lambson, 2,4-diethylthioxanthen-9-one

### Fluorescent Brightener

Telalux KCB: 1,4-bis(2-benzoxazolyl)naphthalene, manufactured by Clariant Japan K.K.

### Surfactant

BYK-UV3500: product name manufactured by BYK Additives & Instruments

### Polymerization Inhibitor

LA-7RD: product name "ADK STAB LA-7RD", manufactured by ADEKA Corporation, 2,2,6,6-tetramethyl-4-hydroxypiperidine-1-oxyl.
UV-10: BisTEMPO sebacate (bis(2,2,6,6-tetramethyl-4-piperidyl-1-oxyl) sebacate, manufactured by Seiko Chemical Co., Ltd.
MEHQ: p -methoxyphenol, manufactured by Kanto Chemical Co., Inc.

### 3.2 Evaluation Method

### 3.2.1 Viscosity

The viscosity of the radiation-curable ink jet ink composition according to each example obtained above is measured in an environment of 20°C using a rotary viscometer (product name "Rheometer MCR-301", manufactured by Anton Paar GmbH). The evaluation criteria are as follows.

### Evaluation Criteria

AA: Viscosity is less than 10 mPa·s.
A: Viscosity is 10 mPa·s or more and less than 15 mPa·s.
B: Viscosity is 15 mPa·s or more and less than 20 mPa·s.
C: Viscosity is 20 mPa·s or more.

### 3.2.2 High-Temperature Storability

The radiation-curable ink jet ink composition according to each example obtained above is charged into a glass bottle, and stored at 60°C for 21 days. The viscosity at 20°C before and after the storage is measured in the same manner as described above to determine a viscosity change before and after the storage. The evaluation criteria are shown below.

### Evaluation Criteria

A: Thickening rate is less than 5%.
B: Thickening rate is 5% or more and less than 10%
C: Thickening rate is 10% or more

### 3.2.3 Low-Temperature Storability

The radiation-curable ink jet ink composition according to each example obtained above is charged into a glass bottle, and stored at -20°C for 4 days. The ink composition before and after the storage is filtered and collected with a metal mesh filter, and the filter is visually checked. The evaluation criteria are shown below.

### Evaluation Criteria

A: Occurrence of foreign matter is not observed.
B: Occurrence of foreign matter is observed.

### 3.2.4 Curability

Cotton swab-loaded tackiness evaluation is performed. Specifically, the radiation-curable ink jet ink composition according to each example obtained above is applied to a polyvinyl chloride medium with a bar coater such that the coating thickness of the ink composition is 10 µm, and is irradiated with ultraviolet rays at a rate of 0.04 sec/cm at a predetermined irradiation intensity. At this time, an LED having a peak wavelength at 395 nm is used as a light source. Then, the surface of the coating film is rubbed with a cotton swab, and the curability is evaluated based on the irradiation energy at which the cotton swab is not colored. The evaluation criteria are as follows.

### Evaluation Criteria

A: Irradiation energy is less than 200 mJ/cm².
B: Irradiation energy is 200 mJ/cm² or more and less than 350 mJ/cm².
C: Irradiation energy is 350 mJ/cm² or more and less than 500 mJ/cm².

### 3.2.5 Abrasion Resistance

Using a bar coater, the radiation-curable ink jet ink composition according to each example obtained above is applied onto a polyvinyl chloride film (JT5829R, manufactured by MACtac) so as to have a thickness of 10 µm. Next, a coating film is formed by curing the ink composition with an energy of 400 mJ/cm² using a metal halide lamp (manufactured by Eye Graphics Company). Thereafter, in conformity with JIS K 5701 (ISO 11628) (which specifies the method for testing inks, paint samples, and printed matter used in planographic printing), the abrasion resistance is evaluated by using a Gakushin type rubbing fastness tester (manufactured by Tester Sangyo Co., Ltd.). Specifically, a gold cloth is put on the surface of the coating film, which is rubbed 50 times with a load of 500 g, and the peeling in the cured surface of the recorded matter after rubbing is visually compared. The evaluation criteria are as follows.

### Evaluation Criteria

A: Neither contamination of the gold cloth nor peeling or flaws in the image surface is observed.
B: At least one of contamination of the gold cloth and peeling or flaws in the image surface is observed. (The base is invisible.)
C: Flaws or peeling in the image surface is large, and there are areas where the base is visible.

### 3.2.6 Bending Test

Using a bar coater, the radiation-curable ink jet ink composition according to each example obtained above is applied onto a polyvinyl chloride film (JT5829R, manufactured by MACtac) so as to have a thickness of 10 µm. Next, a coating film is formed by curing the ink composition with an energy of 400 mJ/cm² using a metal halide lamp (manufactured by Eye Graphics Company). The release paper of the vinyl chloride film on which the coating film is formed is peeled off, and the film is cut into a strip shape with a width of 1 cm and a length of 8 cm to produce a test piece. For each test piece, an elongation rate as extensibility is measured using a tensile tester (TENSILON, manufactured by Orientec Co., Ltd.). The elongation rate is a numerical value at a point in time when a crack occurs when the test piece is pulled at 5 mm/min. The numerical value is calculated from {(length at crack - length before extension)/length before extension × 100}. The evaluation criteria are shown below.

### Evaluation Criteria

A: No peeling is observed or peeling in the cured film is observed in less than 10% of the grid.
B: Peeling in the cured film is observed in 10% or more and less than 35% of the grid.
C: Peeling in the cured film is observed in 35% or more of the grid.

### 3.3 Evaluation Results

Table 1 and Table 2 show the evaluation results.

From the evaluation results in Table 1 and Table 2, the radiation-curable ink jet ink composition according to each Example, which contains a polymerizable compound, and a photopolymerization initiator, wherein the polymerizable compound contains a polyfunctional polymerizable compound, the photopolymerization initiator contains (2,4,6-trimethylbenzoyl)bis(p-tolyl)phosphine oxide, the content of (2,4,6-trimethylbenzoyl)bis(p-tolyl)phosphine oxide is 3% by mass or more with respect to the total amount of the ink composition, and the content of the polyfunctional polymerizable compound is 20% by mass or more with respect to the total amount of the ink composition, can achieve both excellent abrasion resistance and excellent storage stability of the ink composition in high-temperature and low-temperature environments.

In contrast, the radiation-curable ink jet ink composition according to each Comparative Example, which does not satisfy the above configuration, is inferior in at least one of the abrasion resistance, the storage stability of the ink composition in a high-temperature environment, and the storage stability of the ink composition in a low-temperature environment.

The following contents are derived from the above-described embodiments.

An aspect of the radiation-curable ink jet ink composition contains a polymerizable compound and a photopolymerization initiator, wherein the polymerizable compound contains a polyfunctional polymerizable compound, the photopolymerization initiator contains (2,4,6-trimethylbenzoyl)bis(p-tolyl)phosphine oxide, the content of (2,4,6-trimethylbenzoyl)bis(p-tolyl)phosphine oxide is 3% by mass or more with respect to the total amount of the ink composition, and the content of the polyfunctional polymerizable compound is 20% by mass or more with respect to the total amount of the ink composition.

In the aspect of the radiation-curable ink jet ink composition, the polyfunctional polymerizable compound may contain a bifunctional polymerizable compound.

In any aspect of the radiation-curable ink jet ink composition, the bifunctional polymerizable compound may contain a polymerizable compound represented by Formula (1) below, and the content of the polymerizable compound represented by Formula (1) above may be 10% by mass or more with respect to the total amount of the ink composition:

H₂C=CR¹-CO-OR²-O-CH=CH-R³ ··· (1)

where R¹ is a hydrogen atom or a methyl group, R² is a divalent organic residue having 2 to 20 carbon atoms, and R³ is a hydrogen atom or a monovalent organic residue having 1 to 11 carbon atoms.

In the aspect of the radiation-curable ink jet ink composition, the content of the polymerizable compound represented by Formula (1) above may be 70% by mass or less with respect to the total amount of the ink composition.

In any aspect of the radiation-curable ink jet ink composition, the content of the bifunctional polymerizable compound may be 20% by mass or more and 70% by mass or less with respect to the total amount of the ink composition.

In any aspect of the radiation-curable ink jet ink composition, the bifunctional polymerizable compound may contain any one or more selected from 1,6-hexanediol diacrylate, dipropylene glycol diacrylate, and tripropylene glycol diacrylate.

In any aspect of the radiation-curable ink jet ink composition, the polyfunctional polymerizable compound may contain a tri- or more functional polymerizable compound, and the tri- or more functional polymerizable compound may contain any one or more selected from trimethylolpropane triacrylate, ethylene oxide-modified trimethylolpropane triacrylate, and dipentaerythritol hexaacrylate.

In any aspect of the radiation-curable ink jet ink composition, the polymerizable compound may contain a monofunctional polymerizable compound, and the monofunctional polymerizable compound may contain a nitrogen-containing monofunctional polymerizable compound.

In any aspect of the radiation-curable ink jet ink composition, the polymerizable compound may contain a monofunctional polymerizable compound, and the monofunctional polymerizable compound may contain a hydroxy group-containing monofunctional polymerizable compound.

In any aspect of the radiation-curable ink jet ink composition, the polymerizable compound may contain a monofunctional polymerizable compound, and the monofunctional polymerizable compound may contain a saturated hydrocarbon ring-containing monofunctional polymerizable compound.

In any aspect of the radiation-curable ink jet ink composition, the polymerizable compound may contain a monofunctional polymerizable compound, and the monofunctional polymerizable compound may contain an ether ring-containing monofunctional polymerizable compound.

Any aspect of the radiation-curable ink jet ink composition may contain a polymerization inhibitor, wherein the polymerization inhibitor may contain any one or more selected from bis(2,2,6,6-tetramethyl-4-piperidyl-1-oxyl) sebacate and 2,2,6,6-tetramethyl-4-hydroxypiperidine-1-oxyl.

Any aspect of the radiation-curable ink jet ink composition may contain a fluorescent brightener.

Any aspect of the radiation-curable ink jet ink composition may be a black ink or a yellow ink.

The present disclosure is not limited to the above-mentioned embodiment, and various modifications are possible. For example, the present disclosure includes a configuration substantially the same as the configuration described in the embodiment, for example, a configuration having the same function, method, and result, or a configuration having the same object and effect. In addition, the present disclosure includes configurations in which non-essential parts of the configuration described in the embodiments are replaced. In addition, the present disclosure includes configurations that achieve the same operational effects or configurations that can achieve the same objects as those of the configurations described in the embodiments. In addition, the present disclosure includes configurations in which a known technology is added to the configurations described in the embodiments.

## Claims

1. A radiation-curable ink jet ink composition comprising:
a polymerizable compound; and
a photopolymerization initiator, wherein
the polymerizable compound contains a polyfunctional polymerizable compound,
the photopolymerization initiator contains (2,4,6-trimethylbenzoyl)bis(p-tolyl)phosphine oxide,
a content of (2,4,6-trimethylbenzoyl)bis(p-tolyl)phosphine oxide is 3% by mass or more with respect to a total amount of the ink composition, and
a content of the polyfunctional polymerizable compound is 20% by mass or more with respect to the total amount of the ink composition.

2. The radiation-curable ink jet ink composition according to claim 1, wherein the polyfunctional polymerizable compound contains a bifunctional polymerizable compound.

3. The radiation-curable ink jet ink composition according to claim 1, wherein
the bifunctional polymerizable compound contains a polymerizable compound represented by Formula (1) below, and
a content of the polymerizable compound represented by Formula (1) above is 10% by mass or more with respect to the total amount of the ink composition:
H₂C=CR¹-CO-OR²-O-CH=CH-R³ ··· (1)
where R¹ is a hydrogen atom or a methyl group, R² is a divalent organic residue having 2 to 20 carbon atoms, and R³ is a hydrogen atom or a monovalent organic residue having 1 to 11 carbon atoms.

4. The radiation-curable ink jet ink composition according to claim 3, wherein the content of the polymerizable compound represented by Formula (1) above is 70% by mass or less with respect to the total amount of the ink composition.

5. The radiation-curable ink jet ink composition according to claim 3, wherein a content of the bifunctional polymerizable compound is 20% by mass or more and 70% by mass or less with respect to the total amount of the ink composition.

6. The radiation-curable ink jet ink composition according to claim 2, wherein the bifunctional polymerizable compound contains any one or more selected from 1,6-hexanediol diacrylate, dipropylene glycol diacrylate, and tripropylene glycol diacrylate.

7. The radiation-curable ink jet ink composition according to claim 1, wherein
the polyfunctional polymerizable compound contains a tri- or more functional polymerizable compound, and
the tri- or more functional polymerizable compound contains any one or more selected from trimethylolpropane triacrylate, ethylene oxide-modified trimethylolpropane triacrylate, and dipentaerythritol hexaacrylate.

8. The radiation-curable ink jet ink composition according to claim 1, wherein
the polymerizable compound contains a monofunctional polymerizable compound, and
the monofunctional polymerizable compound contains a nitrogen-containing monofunctional polymerizable compound.

9. The radiation-curable ink jet ink composition according to claim 1, wherein
the polymerizable compound contains a monofunctional polymerizable compound, and
the monofunctional polymerizable compound contains a hydroxy group-containing monofunctional polymerizable compound.

10. The radiation-curable ink jet ink composition according to claim 1, wherein
the polymerizable compound contains a monofunctional polymerizable compound, and
the monofunctional polymerizable compound contains a saturated hydrocarbon ring-containing monofunctional polymerizable compound.

11. The radiation-curable ink jet ink composition according to claim 1, wherein
the polymerizable compound contains a monofunctional polymerizable compound, and
the monofunctional polymerizable compound contains an ether ring-containing monofunctional polymerizable compound.

12. The radiation-curable ink jet ink composition according to claim 1, comprising a polymerization inhibitor, wherein the polymerization inhibitor contains any one or more selected from bis(2,2,6,6-tetramethyl-4-piperidyl-1-oxyl) sebacate and 2,2,6,6-tetramethyl-4-hydroxypiperidine-1-oxyl.

13. The radiation-curable ink jet ink composition according to claim 1, comprising a fluorescent brightener.

14. The radiation-curable ink jet ink composition according to claim 1, wherein the radiation-curable ink jet ink composition is a black ink or a yellow ink.
